(19) Europäisches Patentamt
European Patent Office
Office européen des brevets

(11) **EP 2 923 299 B1**

(12) **EUROPÄISCHE PATENTSCHRIFT**

(45) Veröffentlichungstag und Bekanntmachung des Hinweises auf die Patenterteilung:
**22.02.2017   Patentblatt 2017/08**

(21) Anmeldenummer: **13801984.9**

(22) Anmeldetag: **19.11.2013**

(51) Int Cl.:
*G06F 21/50* (2013.01)      *G06K 7/10* (2006.01)
*G06K 7/00* (2006.01)

(86) Internationale Anmeldenummer:
**PCT/EP2013/003493**

(87) Internationale Veröffentlichungsnummer:
**WO 2014/079561 (30.05.2014 Gazette 2014/22)**

(54) **VERFAHREN ZUM BETREIBEN EINES KOMMUNIKATIONSSYSTEMS**

METHOD FOR OPERATING A COMMUNICATION SYSTEM

PROCÉDÉ D'EXPLOITATION D'UN SYSTÈME DE COMMUNICATION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **21.11.2012   DE 102012022735**

(43) Veröffentlichungstag der Anmeldung:
**30.09.2015   Patentblatt 2015/40**

(73) Patentinhaber: **Giesecke & Devrient GmbH 81677 München (DE)**

(72) Erfinder:
• **WACKER, Dirk 81547 München (DE)**
• **MARTINI, Ullrich 81669 München (DE)**

(56) Entgegenhaltungen:
**US-A1- 2012 249 296**

• **LISHOY FRANCIS ET AL: "Practical NFC Peer-to-Peer Relay Attack using Mobile Phones",** INTERNATIONAL ASSOCIATION FOR CRYPTOLOGIC RESEARCH,, Bd. 20100428:135139, 23. April 2010 (2010-04-23), Seiten 1-15, XP061004466, [gefunden am 2010-04-23]

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die Erfindung betrifft ein Verfahren zum Betreiben eines Kommunikationssystems. Das Kommunikationssystem umfasst einen Transponder mit mindestens einer Antenne. Der Transponder kann insbesondere in Gestalt eines tragbaren, kartenförmigen Datenträgers ausgestaltet sein. Ferner umfasst das Kommunikationssystem ein Lesegerät mit mindestens einer Antenne, wobei das Lesegerät zum Austausch von Daten mit dem Transponder ausgebildet ist. Ein Austausch von Daten zwischen dem Transponder und dem Lesegerät ist innerhalb einer vorgegebenen Reichweite möglich. Zur Absicherung der Kommunikation gegenüber einer Relay-Attacke erfolgt eine Messung und Auswertung der Zeit eines von dem Lesegerät an den Transponder übertragenen Kommandos und dem Empfang einer entsprechenden Antwort des Transponders durch das Lesegerät.

Zum Verhindern einer Relay-Attacke kann eine Messung der Signallaufzeit durchgeführt werden. Die Gesamtlaufzeit setzt sich hierbei aus der Laufzeit eines Signals (Hinweg eines Kommandos und Rückweg einer Antwort) mit der Zeit zum Empfangen und Bearbeiten des Kommandos und dem Aussenden der Antwort zusammen. Die Gesamtlaufzeit darf dann einen bestimmten Maximalwert nicht überschreiten.

Es ist ferner bekannt, mittels des so genannten "distance-bounding"-Protokolls eine obere Grenze der physikalischen Distanz zwischen einer prüfenden Einheit (verifier V) und einer beweisenden Einheit (prover P) zu überprüfen. Das Verfahren basiert auf der Auswertung der Verzögerungszeit zwischen dem Aussenden einer Challenge und dem Empfang einer hierzu korrespondierenden Antwort. Die Verzögerungszeit ermöglicht es der prüfenden Einheit eine Obergrenze der Kommunikationsdistanz zu berechnen. Das Verfahren basiert auf dem Umstand, dass elektromagnetische Wellen sich nahezu mit Lichtgeschwindigkeit ausbreiten, aber niemals schneller sind.

In einer Variante dieses Protokolls können sich die prüfende Einheit, zum Beispiel ein Lesegerät, und die beweisende Einheit, zum Beispiel ein Transponder, ein gemeinsames Geheimnis für eine Challenge-Response-Authentisierung teilen. Der Transponder versendet hierbei die Response nicht an das Lesegerät. Stattdessen erfragt das Lesegerät einen oder mehrere Teile der Response in zufälliger Art, die der Transponder innerhalb einer Zeitspanne beantworten muss. Zur Erhöhung der Sicherheit kann dieses Vorgehen wiederholt werden. Bei dieser Variante handelt es sich im Prinzip um ein kryptographisches Protokoll, wobei in speziellen Zeitschranken Ergebnisse präsentiert werden müssen. Dies erschwert es einem Angreifer, eine so genannte Relay-Attacke durchzuführen, da der Angreifer in der Zeitvorgabe die Ergebnisse der Challenge nicht liefern kann. Hier werden zwangsläufig Zeitschranken überschritten.

Bei kontaktlosen tragbaren Datenträger gemäß dem Standard ISO/IEC 14443 besteht keine Möglichkeit, das oben beschriebene "distance-bounding"-Protokoll durchzuführen, so dass ein Kommunikationssystem aus tragbarem Datenträger und Lesegerät keine Erkennung durchführen kann, ob sich beide Kommunikationspartner tatsächlich in der vorgesehenen Kommunikationsreichweite von ca. 10 cm befinden oder ob durch einen Relay-Angriff eine durch den Besitzer des Datenträgers ungewollte Kommunikation des Datenträgers mit einem entfernten, kontaktlosen Lesegerät stattfindet. Eine Realisierung des distance bounding-Protokolls würde eine Erweiterung der ISO/IEC 14443 nach sich ziehen, um die sehr genauen Timing Vorgaben an das Antwortverhalten des Datenträgers umsetzen zu können.

Es ist Aufgabe der vorliegenden Erfindung, ein Verfahren zum Betreiben eines Kommunikationssystems anzugeben, mit dem eine Relay-Attacke zuverlässig erkannt bzw. in der Folge abgewehrt werden kann. Insbesondere soll dieses Verfahren in der Lage sein, dass ein Lesegerät das Antwortzeitverhalten eines Transponders beurteilen kann. Hierbei sollen insbesondere keine Änderungen an dem bestehenden Standard ISO/ IEC 14443 erforderlich sein. Eine weitere Aufgabe besteht darin, ein entsprechendes Kommunikationssystem anzugeben.

Aus der US 2012/249296 A1 geht ein Verfahren zum Absichern einer NFC-Kommunikation vor Angriffen hervor, bei dem ein Austausch von Informationen zwischen einem Lesegerät und einer kontaktlosen Karte mit einer bestimmten Zeitdauer stattfindet. Gemäß dem Verfahren wird ein Rückführsignal mittels eines Pseudoalgorithmus verschlüsselt.

Diese Aufgabe wird gelöst durch ein Verfahren gemäß den Merkmalen des Patentanspruches 1 sowie ein Kommunikationssystem gemäß den Merkmalen des Patentanspruches 13. Vorteilhafte Ausgestaltungen ergeben sich aus den jeweiligen abhängigen Patentansprüchen.

Die Erfindung schlägt ein Verfahren zum Betreiben eines Kommunikationssystems vor, das einen Transponder mit mindestens einer Antenne, insbesondere in Gestalt eines tragbaren Datenträgers, sowie ein Lesegerät mit mindestens einer Antenne umfasst. Das Lesegerät ist zum Austausch von Daten mit dem Transponder ausgebildet. Ein Austausch von Daten zwischen dem Transponder und dem Lesegerät ist innerhalb einer vorgegebenen Reichweite möglich. Es erfolgt eine Messung und Auswertung der Zeitdauer eines von dem Lesegerät an den Transponder übertragenen Kommandos und dem Empfang einer entsprechenden Antwort des Transponders durch das Lesegerät. Dabei erfolgt eine Verarbeitung einer kartenindividuellen Zeitdauer, wobei die kartenindividuelle Zeitdauer angibt, wie lange der Transponder für den Empfang und das Bearbeiten eines von dem Lesegerät empfangenen Kommandos sowie das Senden einer entsprechenden Antwort verwendet. Die gemessene Zeitdauer wird im Lesegerät unter Verwendung der kartenindividuellen Zeitdauer ausgewertet.

Das vorgeschlagene Verfahren ermöglicht es, Relay-Attacken zu erkennen. Dabei müssen keine Änderungen an einem gemäß ISO/IEC 14443 ausgebildeten Transponder vorgenommen werden. Die einzige Voraussetzung zur Durchführung des Verfahrens besteht darin, dass das Lesegerät eine Zeitdauermessung vornehmen kann. Das Verfahren ermöglicht die Erzielung einer hohen Genauigkeit zur Erkennung einer Relay-Attacke.

Gemäß der Erfindung wird die kartenindividuelle Zeitdauer in der Antwort des Transponders an das Lesegerät zur Auswertung übertragen. Die Auswertung der kartenindividuellen Zeitdauer ermöglicht es dem Lesegerät, zu entscheiden, ob eine Relay-Attacke vorliegt oder nicht.

Gemäß einer weiteren Ausgestaltung misst das Lesegerät die Zeitdauer zwischen dem Absenden des Kommandos und dem Erhalten der Antwort des Transponders, wobei anhand der Differenz zwischen der gemessenen Zeitdauer und der kartenindividuellen Zeitdauer auf eine Relay-Attacke geschlossen werden kann. Ist die Differenz größer als ein vorgegebener Grenzwert, so kann auf einen Angriff geschlossen werden. Gemäß dieser Ausgestaltung wird bei dem Verfahren die reine Laufzeit des Signals abzüglich der Verarbeitungszeit in dem Transponder zur Entscheidung, ob eine Relay-Attacke vorliegt oder nicht, herangezogen.

Gemäß einer weiteren zweckmäßigen Ausgestaltung wird die kartenindividuelle Zeitdauer abgesichert von dem Transponder an das Lesegerät übertragen. Hierdurch ist eine authentische Übertragung der kartenindividuellen Zeitdauer an das Lesegerät möglich. Die sichere Übertragung kann mittels eines klassischen Verschlüsselungsmechanismus, wie zum Beispiel Session Keys oder einem Diffie-Hellman Schlüsselaustauschverfahren oder andersartigen sicheren Authentifizierungen erfolgen. Hierdurch kann ein Relay-Angreifer die kartenindividuelle Zeitdauer nicht ohne weiteres abfragen und verwenden, um dem Lesegerät ein sicheres Verfahren vorzutäuschen.

In einer weiteren Ausgestaltung ist das Kommando eine Challenge im Rahmen einer Challenge-Response-Authentisierung. Die kartenindividuelle Zeitdauer wird dann mit der Response zusammen als Antwort an das Lesegerät übertragen.

Alternativ oder zusätzlich kann die Challenge eine Änderung der durch das Lesegerät ermittelten Zeitdauer nach sich ziehen. Dadurch wird in vorteilhafter Weise erreicht, dass durch die übertragene Challenge die Ausführungszeit im Transponder gezielt beeinflusst werden kann. Dazu werden Datenwerte als Challenge genutzt. Damit sind Replay-Attacken sehr wirksam unterbunden, sollte ein verschlüsselter Kanal diese Art von Angriff nicht abwehren können.

In einer alternativen Ausgestaltung der Erfindung wird das Verfahren mehrfach ausgeführt. Es wird jeweils die Zeitdauer zwischen Sendeschritt und Empfangsschritt ermittelt und mit einer vorgegebenen Zeitdauer als Grenzwert verglichen. Diese Zeitdauer ist üblicherweise die minimale Zeitdauer, die die Karte für den Befehl benötigt, zuzüglich der Zeit, die für die Kommunikation benötigt wird. Alternativ wird anstelle der minimalen Zeitdauer ein Mittelwert von gemessenen Zeitdauern ermittelt und als vorgegebene Zeitdauer verwendet. Als Mittelwert sind insbesondere der Median der gemessenen Zeitdauern, das arithmetische Mittel oder das geometrische Mittel geeignet.

Die Idealzeitdauer ist dabei ein unter Testbedingungen oder Idealbedingungen erfasster Wert. Die minimale Zeitdauer ist dahingegen die Zeitdauer, die für das bestehende Kommunikationssystem gemessen wurde, also größer ist, als die Idealzeitdauer.

Durch die Wiederholung des Verfahrens und der Vergleich mit der Minimalzeitdauer oder der vorgegebenen Zeitdauer wird das Rauschen aus dem Signal entfernt oder zumindest stark reduziert. Einmalige Verzögerungen bei der Übertragung und/ oder einmalige Umwelteinflüsse, die zu einer Erhöhung der gemessenen Zeitdauer führen, aber prinzipiell nicht durch eine Relay-Attacke verursacht werden, können durch die Bildung des Mittelwerts über bereits gemessene Zeitdauern herausgefiltert werden. Anders ausgedrückt wird das Rauschen des Signals durch Bilden eines Mittelwerts verringert. Dadurch können kleinere Zeittoleranzen angenommen werden, deren Überschreitung zum Erkennen einer Relay-Attacke führen. Die Durchführung einer Relay-Attacke wird durch diese mehrfache Wiederholung stark erschwert, das Kommunikationsverfahren enorm verbessert.

Die Anzahl der Wiederholung ist nicht beschränkt, um das Rauschen signifikant zu verringern sind eintausend und mehr Wiederholungen sinnvoll. Es ist auch vorgesehen, das Wiederholen des Verfahrens abzubrechen und erneut zu starten. Dies ist sinnvoll, wenn die aktuell gemessenen Zeitdauern in den einzelnen Wiederholungen zu stark voneinander abweichen, beispielsweise eine Abweichung von 30% oder mehr aufweisen.

Erfindungsgemäß ist weiterhin vorgesehen, dass die gemessene Zeitdauer von der Länge des Kommandos abhängig ist und die für die Länge des Kommandos Idealzeitdauer, minimale Zeitdauer und/ oder der Median oder der Durchschnitt der gemessenen Zeitdauern im Lesegerät als Referenzwert abgelegt ist. Starke Abweichungen von diesem Referenzwert zeigen somit frühzeitig Relay-Attacken an und sichern das Kommunikationssystem zusätzlich.

In einer Ausgestaltung der Erfindung ist das Verfahren zweistufig, wobei in einer ersten Phase ein sicherer Kanal zwischen Lesegerät und Transponder aufgebaut wird und in einer zweiten Phase die Zeitdauermessung und Zeitdauerauswertung mittels der vorher beschriebenen Verfahrensschritte erfolgt. Durch den Aufbau eines sicheren Kanals können Lesegerät-Kommando und Transponder-Antwort sehr schnell übertragen werden und Abweichungen aufgrund voranzustellender Authentisierungen werden vermieden. Das Verfahren wird dadurch sicherer für das Erkennen der Relay-Attacken.

In einer bevorzugten Ausgestaltung des Verfahrens werden die Software-Routinen - auch Applets genannt - im Transponder zur Verarbeitung des Kommandos derart ausgebildet, dass die Verarbeitungszeit der Kommandos gleicher Datenlänge stets konstant ist. Damit ist sichergestellt, dass die kartenindividuelle Zeitdauer konstant ist.

Zusätzlich kann der Transponder während der Bearbeitung des von dem Lesegerät empfangenen Kommandos eine oder mehrere Messungen vornehmen und/ oder einen oder mehrere Sensoren überwachen, um festzustellen, ob die aktuelle Ausführungszeit der Bearbeitung von der kartenindividuellen Zeitdauer abweicht. Hierzu kann beispielsweise eine Auswertung von Timern, Registern oder Sensoren für die interne Uhr (clock), einen externen Takt oder Spannung erfolgen, wobei anschließend ein Vergleich von Sollwerten durchgeführt wird.

Zusätzlich kann vorgesehen sein, dass der oder die Messwerte zusätzlich zu der kartenindividuellen Zeitdauer in der Antwort an das Lesegerät übertragen werden. Alternativ oder zusätzlich können der oder die Messewerte in die kartenindividuelle Zeitdauer einfließen.

Das von dem Lesegerät an den Transponder übertragene Kommando kann ein APDU-Kommando sein, mit dem die kartenindividuelle Zeitdauergezielt durch das Lesegerät angefragt wird. Ein solches Kommando stellt dann ein spezielles Relay-Angriff-Prüfkommando dar. Es ist flexibel auf unterschiedliche Transponder anwendbar und standardisiert.

Alternativ kann das von dem Lesegerät an den Transponder übertragene Kommando ein beliebiges APDU-Kommando sein. Die Verwendung eines beliebigen Kommandos ermöglicht die Verschleierung einer Relay-Prüfung. Bei dieser Variante ist es zweckmäßig, wenn das Lesegerät und der Transponder vorab aushandeln, in Reaktion auf welches APDU-Kommando die kartenindividuelle Zeitdauer in der Antwort an das Lesegerät übertragen wird.

Die kartenindividuelle Zeitdauer kann durch den Transponder gemessen oder berechnet sein. Diese Messung oder Berechnung kann einmalig erfolgen. Das Ergebnis der Messung oder Berechnung kann dann in einem Speicher des Transponders abgelegt sein. Es versteht sich, dass die Messung oder Berechnung der kartenindividuellen Zeitdauer auf sichere Weise erfolgen muss, um eine Relay-Attacke in der Zukunft zuverlässig verhindern zu können.

Alternativ kann die kartenindividuelle Zeitdauer bekannt sein und in einem Speicher des Transponders enthalten sein. Die kartenindividuelle Zeitdauer kann beispielsweise im Rahmen einer Personalisierung ermittelt und sicher in den Transponder eingebracht sein. Die Zeitdauer kann darüber hinaus in einer Testphase während der Herstellung des Transponders ermittelt werden und in den Speicherbereich eingebracht werden.

Die Erfindung schlägt weiter ein Kommunikationssystem vor, das einen Transponder mit mindestens einer Antenne, insbesondere in Gestalt eines tragbaren Datenträgers, sowie ein Lesegerät mit mindestens einer Antenne umfasst, wobei das Lesegerät zum Austausch von Daten mit dem Transponder derart ausgebildet ist, dass ein Austausch von Daten zwischen dem Transponder und dem Lesegerät innerhalb einer vorgegebenen Reichweite möglich ist. Das Lesegerät ist dazu ausgebildet, eine Messung und Auswertung der Zeit eines von dem Lesegerät an den Transponder übertragenen Kommandos und dem Empfang einer entsprechenden Antwort des Transponders vorzunehmen. Das Lesegerät ist weiter dazu ausgebildet, eine kartenindividuelle Zeitdauer zu verarbeiten, wobei die kartenindividuelle Zeitdauer angibt, wie lange der Transponder für den Empfang und das Bearbeiten eines von dem Lesegerät empfangenen Kommandos sowie das Senden einer entsprechenden Antwort verwendet.

Das erfindungsgemäße Kommunikationssystem weist die gleichen Vorteile auf, wie diese vorstehend in Verbindung mit dem erfindungsgemäßen Verfahren beschrieben wurden.

Das Kommunikationssystem kann weiter dazu ausgebildet sein, die oben beschriebenen Schritte des Verfahrens auszuführen.

Die Erfindung wird nachstehend näher anhand eines Ausführungsbeispiels in der Zeichnung erläutert. Es zeigen:

Fig.1    eine schematische Darstellung eines erfindungsgemäßen Kommunikationssystems, das einen Transponder in Gestalt eines tragbaren Datenträgers sowie ein Lesegerät mit jeweils mindestens einer Antenne umfasst,

Fig. 2    einen Ablaufplan, der das grundsätzliche Verfahren zum Betreiben des Kommunikationssystems in Fig.1 illustriert, und

Tab.1    eine Übersicht über durchschnittliche Zeitdauern, kartenindividuellen Zeitdauern und Abweichungen in Abhängigkeit von der Datenlänge.

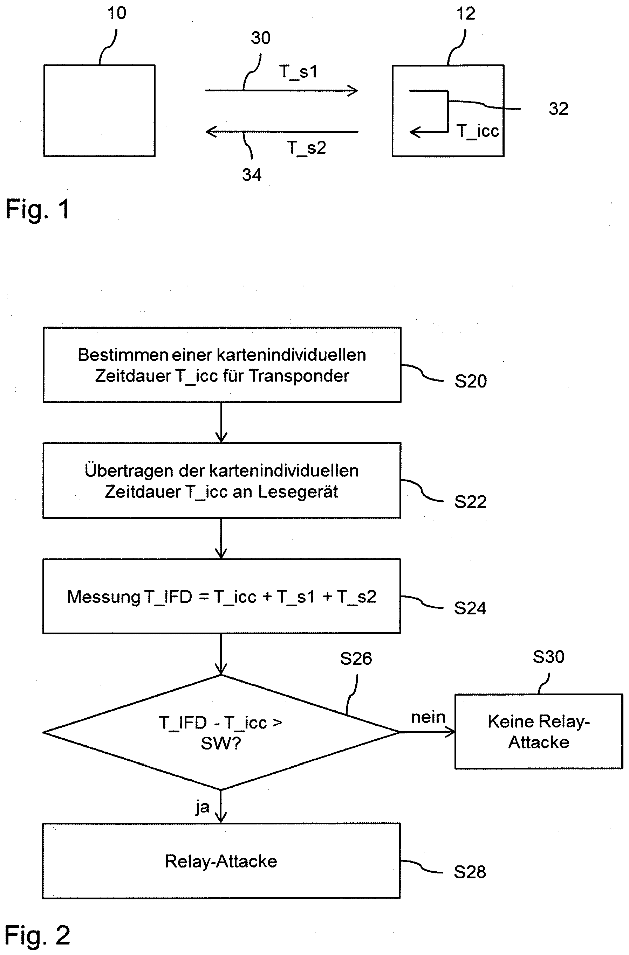

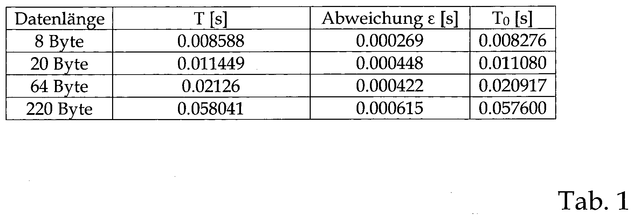

Fig.1 zeigt eine schematische Darstellung eines erfindungsgemäßen Kommunikationssystems. Das Kommunikationssystem umfasst ein Lesegerät 10 sowie einen Transponder 12, vorzugsweise in Gestalt eines kartenförmigen tragbaren Datenträgers. Ein solcher Transponder kann beispielsweise als kontaktlose Smartcard vorliegen. Sowohl das Lesegerät 10 als auch der Transponder 12 umfassen jeweils wenigstens eine nicht näher dargestellte Antenne. Das Lesegerät 10 und der Transponder 12 sind vorzugsweise gemäß dem Standard ISO/ IEC 14443 ausgebildet. Befinden sich der Transponder 12 und das Lesegerät 10 innerhalb einer vorgegebenen Reichweite, so kann ein Austausch von Daten zwischen diesen beiden Komponenten erfolgen. Im Falle der so genannten Nahfeldkommunikation (Near Field Communication - NFC) beträgt eine typische Kommunikationsreichweite ca. 10 cm.

Durch das nachfolgend näher beschriebene Verfahren werden das Lesegerät 10 und der Transponder 12 in die Lage versetzt, ein Antwortzeitverhalten im Rahmen einer Kommunikation zu beurteilen und damit das bekannte "distance bounding" durchzuführen. Das Verfahren kann durchgeführt werden, ohne dass Änderungen an dem Lesegerät 10 und/ oder dem Transponder 12 vorgenommen werden und zu einer Abweichung der Ausführung gemäß ISO/ IEC 14443 führen.

Im Rahmen dieses Verfahrens, das in seiner Grundform in Fig. 2 dargestellt ist, erfolgt eine Messung und Auswertung der Zeit eines von dem Lesegerät 10 an den Transponder 12 übertragenen Kommandos 30 (allgemein: einer Nachricht) und dem Empfang einer entsprechenden Antwort 34 des Transponders 12 durch das Lesegerät 10. Für die Übertragung des Kommandos 30 von dem Lesegerät 10 zu dem Transponder 12 wird eine Zeit $T\_s1$ benötigt, für die Übertragung der Antwort 34 von dem Transponder 12 zu dem Lesegerät 10 wird eine Zeit $T\_s2$ benötigt. Für den Empfang des Kommandos, dessen Bearbeitung und das Aussenden der entsprechenden Antwort in dem Transponder 12 (Bezugszeichen 32) wird eine kartenindividuelle Zeitdauer $T\_icc$ benötigt.

Die kartenindividuelle Zeitdauer $T\_icc$ gibt somit an, wie lange der Transponder 12 zwischen dem Empfang, dem Bearbeiten und dem Senden des Kommandos 30 verwenden kann. Die Bestimmung der kartenindividuellen Zeitdauer $T\_icc$ stellt einen ersten Schritt S20 des erfindungsgemäßen Verfahrens dar.

Die kartenindividuelle Zeitdauer $T\_icc$ kann beispielsweise im Rahmen einer Personalisierung des Transponders 12 sicher in diesen eingebracht werden. Ebenso kann die kartenindividuelle Zeitdauer $T\_icc$ auf sichere Weise in dem Transponder 12 selbst ermittelt werden. Die Ermittlung kann beispielsweise durch eine Messung erfolgen. Die Bestimmung der kartenindividuellen Zeitdauer $T\_icc$ erfolgt vorzugsweise lediglich einmalig unter standardkonformen Bedingungen. Die kartenindividuelle Zeitdauer $T\_icc$ wird dann beispielsweise in einen nicht näher dargestellten internen Speicher des Transponders eingebracht.

Die kartenindividuelle Zeitdauer $T\_icc$ wird in der Antwort 34 des Transponders 12 authentisch, d.h. unverändert, an das Lesegerät 10 übertragen (Schritt S22). Gleichzeitig mit dem Aussenden des Kommandos 30 misst das Lesegerät 10 eine Zeitdauer $T\_IFD$ zwischen dem Senden des Kommandos 30 und dem Erhalten der Antwort 34 (Schritt S24). Die Zeitdauer $T\_IFD$ setzt sich hierbei aus der Summe von $T\_s1$, $T\_s2$ und $T\_icc$ zusammen. Durch die Differenzbildung zwischen der Zeitdauer $T\_IFD$ und der kartenindividuellen Zeitdauer $T\_icc$ kann das Lesegerät 10 bzw. die darauf enthaltene Anwendungssoftware, welche die Daten der Antwort 34 verarbeitet, darauf schließen, ob der Transponder 12 direkt mit dem Lesegerät 10 kommuniziert oder ob ein Relay-Angriff vorliegt.

Hierzu erfolgt ein Vergleich der Differenz mit einem vorgegebenen Schwellwert SW (Schritt S26). Ist die Differenz größer als der Schwellwert SW ("ja"), so wird die Kommunikation mit dem kontaktlosen Transponder 12 durch das Lesegerät 10 abgebrochen. In diesem Fall liegt eine Relay-Attacke vor (Schritt S28). Ist die Differenz kleiner als der Schwellwert SW ("nein"), so wird die Kommunikation mit dem kontaktlosen Transponder 12 durch das Lesegerät 10 fortgeführt, da keine Relay-Attacke vorliegt (Schritt S30).

Für die authentische Übertragung der kartenindividuellen Zeitdauer $T\_icc$ wird vorzugsweise eine sichere Übertragung gewählt. Hierzu kann beispielsweise der so genannte Secure Messaging-Kanal des Transponders verwendet werden. Für den Fall, dass die sichere Übertragung Replay-sicher ist, braucht der Transponder nur die kartenindividuelle Zeitdauer $T\_icc$ in seiner Antwort gesichert an das Lesegerät 10 übertragen.

Um die kartenindividuelle Zeitdauer bei dem Transponder 12 anzufragen, kann durch das Lesegerät 10 ein spezielles Relay-Angriff-Prüfkommando als Kommando 30 an den Transponder 12 übertragen werden. Alternativ kann ein herkömmliches APDU-Kommando im Rahmen einer klassischen oder standardisierten Anfrage an den Transponder zum Verschleiern der Relay-Prüfung verwendet werden. Im letzteren Fall kann hierzu eine zufällige Auswahl eines beliebigen APDU-Kommandos verwendet werden.

Das beliebige APDU-Kommando wird beispielsweise durch den Transponder 12 als auch das Lesegerät 10 in vorhergehenden Schritten ausgehandelt, so dass der Transponder 12 das Relay-Prüfkommando erkennt und in seiner Antwort 34 die kartenindividuelle Zeitdauer $T\_icc$ an das Lesegerät 10 überträgt. Alternativ wird das beliebige APDU-Kommando nicht vorher ausgehandelt, sondern die Datenstrukturen, die in dem APDU-Kommando oder der APDU-Antwort übergeben werden, zeigen an, dass im APDU-Kommando die Zeitdauer $T\_icc$ angefordert bzw. übergeben wird. Beispielsweise wird ein spezielles Type Length Value, kurz TLV-Objekt dazu verwendet.

Optional kann durch das Kommando 30 eine Challenge an den Transponder 12 übertragen werden, die beispielsweise in der Antwort 34 zusammen mit der kartenindividuellen Zeitdauer $T\_icc$ an das Lesegerät 10 zurück übertragen wird. Ebenso kann die Challenge ein definiertes geändertes Zeitverhalten des Kommandos 30 bewirken.

Eine weitere Abwandlung des Verfahrens besteht darin, dass der Transponder 12 während der Abarbeitung des Kommandos 30 eine oder mehrere Messungen vornimmt und/ oder einen oder mehrere Sensoren des Transponders überwacht, um festzustellen, ob die Ausführungszeit signifikant von der Standardzeit, d.

h. der kartenindividuellen Zeitdauer, abweicht. Dies kann beispielsweise durch die Auswertung von Timern/Registern/Sensoren für die interne Clock, den externen Takt, eine Spannung usw. und dem Vergleich mit jeweiligen Sollwerten erfolgen. Wahlweise können der oder die Messwerte in die Berechnung der kartenindividuellen Zeitdauer T_icc einfließen und/ oder zusätzlich zu der kartenindividuellen Zeitdauer in der Antwort 34 an das Lesegerät 10 zurückgegeben werden.

In einer zweiten - nicht figürlich dargestellten - Ausführung wird das Verfahren aus den Figuren 1 und 2 mehrfach wiederholt. Eine sinnvolle Wiederholungszahl ist eintausend, um einmalige Fehler und Umwelteinflüsse, die zu Abweichungen in der Zeitmessung führen, herausfiltern zu können. Dabei wird das Verfahren in zwei Phasen aufgeteilt, wobei in der ersten Phase ein sicherer Kanal aufgebaut wird. Durch Aufbau des sicheren Kanals können die Antworten des Transponders 12 sehr schnell erfolgen. Insbesondere ist die gemessene Zeit T' sehr gut vorhersagbar. Zum Aufbau des Kanals können Standardverfahren wie das Secure Messaging oder Diffie-Hellman Authentisierungen angewendet werden. Der Aufbau des sicheren Kanals kann unterbleiben, wenn sichergestellt ist, dass das Verfahren von einem Dritten nicht manipuliert wird.

In der zweiten Phase des Verfahrens erfolgt die eigentliche Zeitmessung T' zur Erkennung der Relay-Attacke gemäß dem in Figur 1 und 2 beschriebenen Verfahren. Die Messungen werden dabei mehrfach wiederholt und die Gesamtheit der Messungen ergibt die zweite Phase. Es gilt: Wenn die durchschnittliche Zeitdauer T mit einer gewissen Standardabweichung $\sigma$ vorhersagbar ist, dann gilt mit einer Wahrscheinlichkeit $p(\varepsilon)$ für die aktuell gemessene Zeitdauer T':

$$T' = T_0 + \varepsilon$$

wobei die Idealzeitdauer To die Summe aus T_icc, T_s1 und T_s2 ist. To ist dabei entweder anhand der aktuellen Kombination aus Transponder-Lesegerät unter Testbedingungen ermittelt worden oder ist als ein typischer Referenzwert im Lesegerät 20 enthalten.

Das Lesegerät 10 erfasst die aktuelle Zeitdauer T' für jede Wiederholung. Wird die Idealzeitdauer $T_0$ als Referenzwert verwendet, wird geprüft, ob jede aktuelle Zeitdauer T' innerhalb einer Differenz $\varepsilon$, beispielsweise 10% von der Idealzeitdauer To abweicht. Ist dies nicht der Fall, wird eine Relay-Attacke vermutet und die Kommunikation abgebrochen. In einer alternativen Ausführung wird nicht die Idealzeitdauer To als Referenz verwendet, sondern die minimale Zeitdauer T. Ist die minimale Zeitdauer T mehr als 10% kleiner als die tatsächlich gemessene Zeitdauer T', wird das Verfahren ebenfalls abgebrochen und von einer Relay-Attacke ausgegangen. Die minimale Zeitdauer T wird durch die aktuell gemessene Zeitdauer T' ersetzt und als neue minimale Zeitdauer T festgelegt, wenn die aktuell gemessene Zeitdauer T' niedriger ist als die bis dahin verwendete minimale Zeitdauer T.

Anstelle der minimalen Zeitdauer T kann auch ein Mittelwert T, beispielsweise ein Median, über alle bereits erfassten Zeitdauern T' gebildet werden und dieser Mittelwert T als Referenz angenommen werden. Dieser Mittelwert T wird entweder nach dem Durchlaufen aller Wiederholungen des Verfahrens angewendet.

Durch diese Zusammenhänge ergibt sich, dass alle zusätzlichen Aktivitäten des Relay-Angreifers in der Differenz $\varepsilon$ erfolgen müssen, insbesondere führen große räumliche Distanzen und zusätzliches Equipment für eine Weiterleitung des Signals zu einer Überschreitung der Differenz $\varepsilon$. Aufgrund der starken zeitlichen Restriktionen ist ein Relay-Angriff auf das Kommunikationssystem nicht möglich.

In Tabelle 1 ist das Ergebnis eines Versuchsaufbaus dokumentiert. Dazu wurde ein Notebook mit einem Betriebssystem und einem daran angeschlossenen Kartenleser 10 sowie eine Kontaktloskarte als Transponder 12 hinsichtlich der Zeitdauern T, T' und $\varepsilon$ analysiert. Dabei wurden die Datenlängen L der Kommandos 30 variiert. Die kartenindividuelle Zeitdauer T_icc wurde in diesem Aufbau als konstant vorausgesetzt. Das Kommando 30 der jeweiligen Datenlänge L wurde jeweils 1000mal gesendet und von dem Transponder 12 beantwortet.

Eine Implementierung des Verfahrens in ein Kommunikationssystem sieht vor, dass das Lesegerät 10 Kommandos 30 solange zur Karte sendet, bis die Differenz $\varepsilon$ innerhalb eines definierten Bereichs ist. Ist dies der Fall, können vertrauliche Informationen ausgetauscht werden, da sichergestellt ist, dass der Kommunikationspfad nicht weitergeleitet und/ oder abgehört wird.

Dabei kann eine Relay-Attacke für erkannt gelten, wenn eine vordefinierte Anzahl von Wiederholungen des erfindungsgemäßen Verfahrens erfolglos bleibt. Je höher die Anzahl der Wiederholungen ist, desto kleiner kann der definierte Bereich der Differenz $\varepsilon$ sein. Der definierte Bereich der Differenz $\varepsilon$ in den gemäß Tabelle 1 dargestellten Zeitdauern ist beispielsweise 0,1Millisekunde, wodurch damit bereits die Distanz zwischen Lesegerät und Transponder aufgrund der Laufzeit des Signals auf 1km bis 10km eingegrenzt werden kann.

Das Verfahren kann signifikant verbessert werden, wenn kleine Echtzeitbetriebssysteme verwendet werden.

In einer alternativen - ebenfalls figürlich nicht dargestellten - Ausführung des Verfahrens wird ein Kommando an den Transponder 12 gesendet, welches vom Transponder bearbeitet wird. Das Kommando, auch als Startkommando bezeichnet, veranlasst den Transponder 12 zum Starten der Abarbeitung eines Endlosskripts. Zeitgleich mit dem Startkommando, startet das Lesegerät 20 ebenfalls mit der Abarbeitung des Endlosskripts im Lesegerät 20. Zu einem beliebigen Zeitpunkt nach dem Starten des Endlosskripts stoppt das Lesegerät 20 das Endlosskript. Zeitgleich mit dem Stoppen des Endlosskripts sendet das Lesegerät 20 ein zweites Kommando, auch als Stoppkommando bezeichnet, an den Transponder 12. Nach Empfangen des Stoppkommandos stoppt der Transponder ebenfalls die Bearbeitung des Endlosskripts und sendet eine Antwort an das Lesegerät mit dem aktuellen Wert, der im Endlosskript als letztes berechnet wurde oder einem vergleichbaren Parameter, mit dem der zeitlich letzte Bearbeitungsstand des Skripts dokumentiert ist. Dieser Parameter wird im Lesegerät ausgewertet und mit einem Vergleichsparameter im Lesegerät 20 verglichen. Bei Übereinstimmung des Parameters/Wertes innerhalb gewisser Grenzbereiche ist sichergestellt, dass kein Relay-Angriff stattfindet. Das Endlosskript ist beispielsweise eine stetige Addition einer Zufallszahl mit sich selbst. Alternativ sind Komplexe Skripte denkbar, deren Stopp ein Ergebnis zu dem Stoppzeitpunkt liefert.

Das erfindungsgemäße Verfahren nutzt somit zur Detektion eines Relay-Angriffs die reine Laufzeit eines von dem Lesegerät 10 ausgesendeten und wieder empfangenen Signals abzüglich einer bekannten Berechnungszeit des Transponders.

Das vorgeschlagene Verfahren kann auf sehr einfache Weise implementiert werden. Es versetzt Lesegeräte in die Lage, Relay-Angriffe mit NFC-fähigen Endgeräten zuverlässig und mit hoher Genauigkeit zu erkennen. Dabei müssen keine Änderungen an der ISO/IEC 14443 vorgenommen werden. Eine Voraussetzung besteht lediglich darin, dass das kontaktlose Lesegerät eine Zeitmessung vornehmen können muss.

Bezugszeichenliste

| 10 | Lesegerät |
| 12 | Transponder |
| 30 | Kommando |
| 32 | Empfang, Verarbeiten und Senden einer Antwort |
| 34 | Antwort |
| S20 | Verfahrensschritt |
| S22 | Verfahrensschritt |
| S24 | Verfahrensschritt |
| S26 | Verfahrensschritt |
| S28 | Verfahrensschritt |
| S30 | Verfahrensschritt |
| $T\_icc$ | kartenindividuelle Zeitdauer |
| $T\_s1$ | Zeit für die Verarbeitung und Übertragung der Nachricht 30 |
| $T\_s2$ | Zeit für die Übertragung und Auswertung der Antwort 34 |
| $T'$ | aktuell gemessene Zeitdauer |
| $T$ | durchschnittliche und/oder minimale Zeitdauer |
| $T_0$ | Idealzeitdauer |
| $\varepsilon$ | zeitliche Differenz zwischen $T'$ und $T_0$ |
| L | Datenlänge des Kommandos |

**Patentansprüche**

1. Verfahren zum Betreiben eines Kommunikationssystems, das einen Transponder (12) mit mindestens einer Antenne, insbesondere in Gestalt eines tragbaren Datenträgers, sowie ein Lesegerät (10) mit mindestens einer Antenne umfasst, wobei das Lesegerät (10) zum Austausch von Daten mit dem Transponder (12) ausgebildet ist, bei dem ein Austausch von Daten zwischen dem Transponder (12) und dem Lesegerät (10) innerhalb einer vorgegebenen Reichweite möglich ist, mit den Verfahrensschritten:

    - Senden eines Kommando (30) von dem Lesegerät (10) an den Transponder (12);
    - Verarbeiten des Kommandos (30) im Transponder (12) mit Erstellen einer Antwort (34) auf das Kommando (30) durch den Transponder (12);
    - Empfangen der Antwort (34) des Transponders (12) im Lesegerät (10);
    - die Zeitdauer ($T'$) zwischen dem Sendeschritt und dem Empfangsschritt im Lesegerät (10) gemessen wird, wobei der Verarbeitenschritt in einer kartenindividuellen Zeitdauer ($T\_icc$) erfolgt und die kartenindividuelle Zeitdauer ($T\_icc$) angibt, wie lange der Transponder (12) für den Empfang und das Verarbeiten eines von dem Lesegerät (10) empfangenen Kommandos (30) sowie das Senden einer entsprechenden Antwort (34) verwendet;

    **dadurch gekennzeichnet, dass**: die kartenindividuelle Zeitdauer ($T\_icc$) in der Antwort (34) des Transponders (12) an das Lesegerät (10) übertragen wird und

    - die gemessene Zeitdauer ($T'$) im Lesegerät (10) ausgewertet wird, wobei zum Auswerten der gemessenen Zeit ($T'$) die kartenindividuelle Zeit ($T\_icc$) verwendet wird.

2. Verfahren nach Anspruch 1, wobei anhand der Differenz ($\varepsilon$) zwischen der gemessenen Zeitdauer ($T'$) und der kartenindividuellen Zeitdauer ($T\_icc$) auf eine Relay-Attacke geschlossen werden kann.

3. Verfahren nach Anspruch 1 oder 2, bei dem die kartenindividuelle Zeitdauer ($T\_icc$) abgesichert von dem Transponder (12) an das Lesegerät (10) übertragen wird.

4. Verfahren nach einem der vorhergehenden Ansprüche, bei dem das Kommando (30) eine Challenge ist und die kartenindividuelle Zeit (T_icc) mit der Response zusammen als Antwort (20) an das Lesegerät (10) übertragen wird.

5. Verfahren nach Anspruch 4, bei dem die Challenge eine Änderung der durch das Lesegerät (10) ermittelten Zeitdauer nach sich zieht.

6. Verfahren nach einem der vorhergehenden Ansprüche, wobei das Verfahren mehrfach ausgeführt wird und die aktuell gemessene Zeitdauer (T') mit einer vorgegebenen Zeitdauer (T), insbesondere einer minimalen Zeitdauer, als Grenzwert verglichen wird.

7. Verfahren nach einem der vorhergehenden Ansprüche, wobei die gemessene Zeitdauer (T') von der Datenlänge (L) des Kommandos (30) abhängig ist und die für die Länge des Kommandos (30) vorgegebene Zeitdauer (T), insbesondere eine minimale Zeitdauer (T) im Lesegerät (10) als Referenzwert abgelegt ist.

8. Verfahren nach einem der vorhergehenden Ansprüche, bei dem der Transponder (12) während der Bearbeitung des von dem Lesegerät (10) empfangenen Kommandos (30) eine oder mehrere Messungen vornimmt und/ oder einen oder mehrere Sensoren des Transponders (12) überwacht, um festzustellen, ob die Ausführungszeit der Bearbeitung von der kartenindividuellen Zeitdauer (T_icc) abweicht.

9. Verfahren nach Anspruch 8, bei dem der oder die Messwerte zusätzlich zu der kartenindividuellen Zeitdauer (T_icc) in der Antwort (34) an das Lesegerät (10) übertragen werden.

10. Verfahren nach Anspruch 8 oder 9, bei dem der oder die Messwerte in die kartenindividuelle Zeitdauer (T_icc) einfließen.

11. Verfahren nach einem der Ansprüche 1 bis 10, bei dem der Transponder (12) die kartenindividuelle Zeitdauer (T_icc) misst oder berechnet.

12. Verfahren nach einem der Ansprüche 1 bis 10, bei dem die kartenindividuelle Zeitdauer (T_icc) bekannt ist und in einem Speicher des Transponders (12) enthalten ist.

13. Kommunikationssystem, das einen Transponder (12) mit mindestens einer Antenne, insbesondere in Gestalt eines tragbaren Datenträgers, sowie ein Lesegerät (10) mit mindestens einer Antenne umfasst, wobei das Lesegerät (10) zum Austausch von Daten mit dem Transponder (12) derart ausgebildet ist, dass ein Austausch von Daten zwischen dem Transponder (12) und dem Lesegerät (10) innerhalb einer vorgegebenen Reichweite möglich ist, wobei das Lesegerät (10) dazu ausgebildet ist,

- eine Messung und Auswertung der Zeit eines von dem Lesegerät (10) an den Transponder (12) übertragenen Kommandos (30) und dem Empfang einer entsprechenden Antwort (34) des Transponders (12) vorzunehmen, **dadurch gekennzeichnet, dass** die kartenindividuelle Zeitdauer (T_icc) in der Antwort (34) des Transponders (12) an das Lesegerät (10) zur Auswertung übertragen wird
- und die kartenindividuelle Zeitdauer (T_icc) verarbeitet wird, wobei die kartenindividuelle Zeitdauer (T_icc) angibt, wie lange der Transponder (12) für den Empfang und das Bearbeiten eines von dem Lesegerät (10) empfangenen Kommandos (30) sowie das Senden einer entsprechenden Antwort (34) verwendet.

14. Kommunikationssystem nach Anspruch 13, das weiter dazu ausgebildet ist, die Schritte des Verfahrens gemäß einem der Ansprüche 2 bis 12 auszuführen.

**Claims**

1. A method for operating a communication system comprising a transponder (12) having at least one antenna, in particular in the form of a portable data carrier, and a reading device (10) having at least one antenna, wherein the reading device (10) is configured to exchange data with the transponder (12), wherein an exchange of data between the transponder (12) and the reading device (10) is possible within a predetermined range, having the method steps of:

   - sending a command (30) from the reading device (10) to the transponder (12);
   - processing the command (30) in the transponder (12) with generating a response (34) to the command (30) by the transponder (12);
   - receiving the response (34) of the transponder (12) in the reading device (10);
   - measuring the length of time (T') between the step of sending and the step of receiving in the reading device (10), wherein the step of processing is effected within a card-individual length of time (T_icc), and the card-individual length of time (T_icc) specifies how long the transponder (12) takes for the receipt and the processing of a command (30) received from the reading device (10) and the sending of a corresponding response (34);

   **characterized in that** the card-individual length of time (T_icc) is transmitted in the response (34) of the transponder (12) to the reading device (10) and

- the measured length of time (T') is evaluated in the reading device (10), wherein the card-individual time (T_icc) is employed for evaluating the measured time (T').

2. The method according to claim 1, wherein, by means of the difference ($\varepsilon$) between the measured length of time (T') and the card-individual length of time (T_icc), a relay attack can be inferred.

3. The method according to claim 1 or 2, wherein the card-individual length of time (T_icc) is transmitted in secured fashion from the transponder (12) to the reading device (10).

4. The method according to any of the preceding claims, wherein the command (30) is a challenge and the card-individual length of time (T_icc) is transmitted to the reading device (10) together with the response, forming the response (20).

5. The method according to claim 4, wherein the challenge results in a change of the length of time ascertained by the reading device (10).

6. The method according to any of the preceding claims, wherein the method is executed multiple times, and the currently measured length of time (T') is compared to a predetermined length of time (T), in particular a minimum length of time, as limit value.

7. The method according to any of the preceding claims, wherein the measured length of time (T') depends on the data length (L) of the command (30), and the length of time (T) predetermined for the length of the command (30), in particular a minimum length of time (T), is stored as a reference value in the reading device (10).

8. The method according to any of the preceding claims, wherein the transponder (12) effects one or several measurements during the processing of the command (30) received from the reading device (10) and/or monitors one or several sensors of the transponder (12) in order to determine whether the execution time of the processing deviates from the card-individual length of time (T_icc).

9. The method according to claim 8, wherein the measured value or values is/are transmitted in the response (34) to the reading device (10) in addition to the card-individual length of time (T_icc).

10. The method according to claim 8 or 9, wherein the measured value or values is/are incorporated in the card-individual length of time (T_icc).

11. The method according to any of the claims 1 to 10, wherein the transponder (12) measures or computes the card-individual length of time (T_icc).

12. The method according to any of the claims 1 to 10, wherein the card-individual length of time (T_icc) is known and is contained in a memory of the transponder (12).

13. A communication system comprising a transponder (12) having at least one antenna, in particular in the form of a portable data carrier, and a reading device (10) having at least one antenna, wherein the reading device (10) is so configured to exchange data with the transponder (12) that an exchange of data between the transponder (12) and the reading device (10) is possible within a predetermined range, wherein the reading device (10) is configured to

- effect a measurement and evaluation of the time of a command (30) transmitted from the reading device (10) to the transponder (12) and the receipt of a corresponding response (34) of the transponder (12),

**characterized in that** the card-individual length of time (T_icc) is transmitted in the response (34) of the transponder (12) to the reading device (10) for evaluation

- and the card-individual length of time (T_icc) is processed, wherein the card-individual length of time (T_icc) specifies how long the transponder (12) takes for the receipt and the processing of a command (30) received from the reading device (10) and the sending of a corresponding response (34).

14. The communication system according to claim 13, which is further configured to execute the steps of the method according to any of the claims 2 to 12.

**Revendications**

1. Procédé d'exploitation d'un système de communication qui comprend un transpondeur (12) doté d'au moins une antenne, en particulier sous forme d'un support de données portable, ainsi qu'un appareil de lecture (10) doté d'au moins une antenne, l'appareil de lecture (10) étant conçu pour l'échange de données avec le transpondeur (12), dans lequel un échange de données entre le transpondeur (12) et l'appareil de lecture (10) est possible au sein d'une portée prédéfinie, comprenant les étapes de procédé suivantes :

- envoi d'un ordre (30) de l'appareil de lecture (10) au transpondeur (12),

- traitement de l'ordre (30) dans le transpondeur (12) avec constitution d'une réponse (34) à l'ordre (30) par le transpondeur (12),
- réception de la réponse (34) du transpondeur (12) dans l'appareil de lecture (10) ;
- la longueur de temps (T') entre l'étape d'envoi et l'étape de réception est mesurée dans l'appareil de lecture (10), l'étape de traitement ayant lieu sur une longueur de temps (T_icc) individuelle à une carte et la longueur de temps (T_icc) individuelle à la carte indiquant combien de temps le transpondeur (12) emploie à à réception et au traitement d'un ordre (30) reçu de la part de l'appareil de lecture (10) ainsi que pour l'envoi d'une réponse (34) correspondante ; **caractérisé en ce que** :

    la longueur de temps (T_icc) individuelle à la carte est transmise dans la réponse (34) du transpondeur (12) à l'appareil de lecture (10) et

    - la longueur de temps (T') mesurée est évaluée dans l'appareil de lecture (10), cependant que, pour l'évaluation du temps (T') mesuré, le temps (T_icc) individuel à la carte est utilisé.

2. Procédé selon la revendication 1, cependant que, au moyen de la différence ($\varepsilon$) entre la longueur de temps (T') mesurée et la longueur de temps individuelle à la carte (T_icc), une attaque de relais peut être déduite.

3. Procédé selon la revendication 1 ou 2, dans lequel la longueur de temps (T_icc) individuelle à la carte est transmise de manière sécurisée par le transpondeur (12) à l'appareil de lecture (10).

4. Procédé selon une des revendications précédentes, dans lequel l'ordre (30) est une stimulation et le temps (T_icc) individuel à la carte est transmis, conjointement avec la réaction, en tant que réponse (20) à l'appareil de lecture (10).

5. Procédé selon la revendication 4, dans lequel la stimulation entraîne une modification de la longueur de temps déterminée par l'appareil de lecture (10).

6. Procédé selon une des revendications précédentes, le procédé étant exécuté plusieurs fois et la longueur de temps (T') actuellement mesurée étant comparée avec une longueur de temps (T) prédéfinie, en particulier avec une longueur de temps minimale, en tant que valeur-limite.

7. Procédé selon une des revendications précédentes, la longueur de temps (T') mesurée dépendant de la longueur des données (L) de l'ordre (30), et la longueur de temps (T) prédéfinie pour la longueur de l'ordre (30), en particulier une longueur de temps (T) minimale, étant enregistrée dans l'appareil de lecture (10) en tant que valeur de référence.

8. Procédé selon une des revendications précédentes, dans lequel le transpondeur (12), durant le traitement de l'ordre (30) reçu par l'appareil de lecture (10), procède à une ou plusieurs mesures et/ou surveille un ou plusieurs capteurs du transpondeur (12) afin de détecter si le temps d'exécution du traitement diverge du temps (T_icc) individuel à la carte.

9. Procédé selon la revendication 8, dans lequel la ou les valeurs mesurées sont transmises en plus de la longueur de temps (T_icc) individuelle à la carte, dans la réponse (34) à l'appareil de lecture (10).

10. Procédé selon la revendication 8 ou 9, dans lequel la ou les valeurs mesurées sont inclues dans la longueur de temps (T_icc) individuelle à la carte.

11. Procédé selon une des revendications de 1 à 10, dans lequel le transpondeur (12) mesure ou calcule la longueur de temps (T_icc) individuelle à la carte.

12. Procédé selon une des revendications de 1 à 10, dans lequel la longueur de temps (T_icc) individuelle à la carte est connue et est contenue dans une mémoire du transpondeur (12).

13. Système de communication qui comprend un transpondeur (12) doté d'au moins une antenne, en particulier sous forme d'un support de données portable, ainsi qu'un appareil de lecture (10) doté d'au moins une antenne, l'appareil de lecture (10) étant conçu de telle façon pour l'échange de données avec le transpondeur (12) qu'un échange de données entre le transpondeur (12)
et l'appareil de lecture (10) est possible au sein d'une portée prédéfinie, l'appareil de lecture (10) étant conçu pour

    - procéder à une mesure et à une évaluation du temps d'un ordre (30) transmis par l'appareil de lecture (10) au transpondeur (12) et de la réception d'une réponse (34) correspondante du transpondeur (12),
    **caractérisé en ce que**
    la longueur de temps (T_icc) individuelle à la carte est transmise pour évaluation dans la réponse (34) du transpondeur (12) à l'appareil de lecture (10)
    - et la longueur de temps (T_icc) individuelle à la carte est traitée,
    cependant que la
    longueur de temps (T_icc) individuelle à la carte indique combien de temps le transpondeur (12) emploie à la réception et au traitement d'un ordre (30) reçu de la part de l'appareil de lecture (10) ainsi que pour l'envoi d'une réponse (34) correspondante.

14. Système de communication selon la revendication 13, qui est en outre conçu pour exécuter selon une des revendications de 2 à 12 les étapes du procédé.

10    30    T_s1    12

T_icc    32

T_s2

34

## Fig. 1

Bestimmen einer kartenindividuellen Zeitdauer T_icc für Transponder    S20

Übertragen der kartenindividuellen Zeitdauer T_icc an Lesegerät    S22

Messung $T\_IFD = T\_icc + T\_s1 + T\_s2$    S24

S26    S30

$T\_IFD - T\_icc >$ SW?    nein    Keine Relay-Attacke

ja

Relay-Attacke    S28

## Fig. 2

| Datenlänge | T [s] | Abweichung $\varepsilon$ [s] | $T_0$ [s] |
|---|---|---|---|
| 8 Byte | 0.008588 | 0.000269 | 0.008276 |
| 20 Byte | 0.011449 | 0.000448 | 0.011080 |
| 64 Byte | 0.02126 | 0.000422 | 0.020917 |
| 220 Byte | 0.058041 | 0.000615 | 0.057600 |

Tab. 1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 2012249296 A1